(19) Europäisches Patentamt
European Patent Office
Office européen des brevets

(11) **EP 1 233 282 B1**

(12) **FASCICULE DE BREVET EUROPEEN**

(45) Date de publication et mention
de la délivrance du brevet:
**24.11.2010 Bulletin 2010/47**

(51) Int Cl.:
***G01S 13/42*** *(2006.01)*     ***G01S 13/28*** *(2006.01)*
***H01Q 25/00*** *(2006.01)*

(21) Numéro de dépôt: **02290272.0**

(22) Date de dépôt: **05.02.2002**

(54) **Système à émission et réception réparties, notamment radar à émission synthétique et à formation de faisceau par le calcul**

Vorrichtung mit verteilten Sende- und Empfangsantennen, insbesondere für Radar mit synthetischer Emission und Strahlbildung

System with distributed transmit and receive antennas, in particular for radar with synthetic emission and beamforming

(84) Etats contractants désignés:
**AT BE CH CY DE DK ES FI FR GB GR IE IT LI LU MC NL PT SE TR**

(30) Priorité: **16.02.2001 FR 0102177**

(43) Date de publication de la demande:
**21.08.2002 Bulletin 2002/34**

(73) Titulaire: **Thales
75008 Paris (FR)**

(72) Inventeur: **Desodt, Guy,
c/o Thales Intellectual Property
94117 Arcueil Cédex (FR)**

(74) Mandataire: **Lucas, Laurent Jacques
Marks & Clerk France
Conseils en Propriété Industrielle
Immeuble " Visium "
22, avenue Aristide Briand
94117 Arcueil Cedex (FR)**

(56) Documents cités:
**EP-A- 0 423 552**     **FR-A- 2 709 835**
**FR-A- 2 766 017**     **US-A- 5 997 479**

- **YOUNIS M ET AL: "Antenna system for a forward looking SAR using digital beamforming on-receive-only" IGARSS 2000. IEEE 2000 INTERNATIONAL GEOSCIENCE AND REMOTE SENSING SYMPOSIUM. TAKING THE PULSE OF THE PLANET: THE ROLE OF REMOTE SENSING IN MANAGING THE ENVIRONMENT. PROCEEDINGS (CAT. NO.00CH37120), IGARSS 2000. IEEE 2000 INTERNATIONAL GEOSCIENCE AND, pages 2343-2345 vol.5, XP002182205 2000, Piscataway, NJ, USA, IEEE, USA ISBN: 0-7803-6359-0**

**Description**

La présente invention concerne un système à émission et réception réparties. Elle concerne particulièrement un radar à émission synthétique et à formation de faisceau par le calcul, destiné notamment à la surveillance de l'espace aérien.

Il est connu, notamment par la demande de brevet française FR n° 87 08186 de réaliser un radar de surveillance aérienne à antenne répartie sur une grande surface. Le principe de fonctionnement de ce type de radar est décrit dans l'ouvrage de J. Darricaud : Physique et théorie du radar, Tome 3, 3ème édition 1994, pages 538 et suivantes. L'antenne d'un tel radar comporte par exemple un réseau de modules d'émission et un réseau de modules de réception. Le réseau d'émission comporte ainsi par exemple des antennes élémentaires réparties sur un cercle de diamètre de plusieurs dizaines de mètres, voire plusieurs centaines de mètres. La disposition circulaire n'est pas obligatoire, la répartition des antennes élémentaires peut en effet suivre des lignes qui ne sont pas circulaires. Chaque antenne élémentaire est par exemple disposée au sommet d'un mât au pied duquel se trouvent des moyens d'émission d'une onde hyperfréquence, l'ensemble formant un module d'émission. De même, le réseau de réception comporte des capteurs élémentaires répartis par exemple sur un cercle de grande dimension, par exemple concentrique par rapport au précédent. La numérisation du signal reçu est effectuée au niveau d'un capteur élémentaire, puis le signal numérisé est envoyé à un centre pour la formation de faisceau par le calcul (FFC). Une telle antenne répartie a notamment comme avantage d'être peu vulnérable. En effet, une attaque extérieure peut facilement détruire un ou plusieurs modules élémentaires mais très difficilement la totalité ou la majeure partie du réseau. En cas d'agression, seuls quelques modules élémentaires sont détruits mais pas l'ensemble. L'antenne peut donc continuer à fonctionner. Elle présente donc une faible vulnérabilité, du moins elle suit une dégradation douce en cas d'attaque.

Chaque module d'émission émet dans une sous-bande de la bande instantanée d'émission du radar. Ainsi, si la bande d'émission du radar est choisie égale à B kHz, et si le réseau d'émission comporte N modules d'émission, chaque module émet dans une sous-bande de B/N kHz, ce qui peut faire en pratique de l'ordre de quelques dizaines de kHz.

La loi qui définit l'ouverture d'antenne α est donnée approximativement par la relation suivante :

$$\alpha = 70° \times \lambda/d \qquad\qquad (1)$$

où d est le diamètre d'antenne et λ la longueur d'onde du radar.

Un choix de grand réseau s'accorde bien avec l'emploi de grandes longueurs d'onde, aboutissant par exemple à une largeur de faisceau de l'ordre du degré. La longueur d'onde peut être de quelques mètres.

Pour obtenir une bonne couverture radar, le réseau de réception comporte un grand nombre de capteurs élémentaires. Ce nombre N peut être proche de cent. Pour un réseau de plusieurs centaines de mètres de diamètre et une longueur d'onde métrique, ce nombre N donne un espacement entre récepteurs nettement supérieur à une demi-longueur d'onde. Un tel réseau est appelé un réseau lacunaire.

Si la bande de fréquence émise est, à titre d'exemple, de quelques centaines de kHz, la période d'échantillonnage des signaux reçus est de l'ordre de quelques μs. Il y a donc un flux de données complexes à traiter toutes ces quelques μs, d'autant plus important qu'il y a beaucoup de récepteurs. Ce flux de données doit par ailleurs être traité par une chaîne de traitement classique, c'est-à-dire notamment par des filtres Doppler, un circuit de formation de faisceaux par le calcul (FFC) et un circuit de compression d'impulsions. On considère par exemple un réseau de réception comportant 100 récepteurs élémentaires. En sortie de traitement FFC, il y a un certain nombre de faisceaux formés. Etant donné que le réseau est lacunaire, il y a plus de faisceaux que de capteurs élémentaires. En supposant qu'un faisceau occupe un espace angulaire d'environ 0,3° il faut 360/0,3 = 1200 faisceaux pour couvrir 360° en gisement. Si on envisage par ailleurs de couvrir 30° en site, on atteint le nombre de 120 000 faisceaux. La formation de faisceaux par le calcul accroît donc le débit dans le rapport de 120 000 (nombre de faisceaux) sur 100 (nombre de récepteurs). Avec une résolution de 1000 cases distance nécessitant 1000 filtres Doppler, on parvient à un débit de données en entrée considérable. De ce fait, la puissance de calcul nécessaire peut devenir gigantesque et atteindre ainsi quelques dizaines de téraopérations par secondes, soit quelques dizaines de fois $10^{12}$ opérations par seconde.

Un but de l'invention est notamment de réduire cette puissance de calcul nécessaire. A cet effet, l'invention a pour objet un système à émission et réception répartie tel que défini par les revendications.

D'autres caractéristiques et avantages de l'invention apparaîtront à l'aide de la description qui suit faite en regard de dessins annexés qui représentent :

- La figure 1, une illustration d'un radar à émission synthétique et à formation de faisceau par le calcul selon l'art antérieur, par la disposition de ses modules d'émission et de réception ;

- La figure 2, une illustration d'un signal reçu résultant de la répartition géographique des émetteurs du radar précité ;
- La figure 3, un exemple de répartition et de regroupement des modules d'émission et de réception dans un radar selon l'invention ;
- La figure 4, un synoptique des moyens de traitements d'un radar selon l'invention et de leurs connexions aux sous-réseaux d'émission et de réception ;
- La figure 5, deux sous-réseaux de réception formant chacun une antenne de réception unique présentant N diagrammes élémentaires ;
- La figure 6, un couple de sous-réseaux d'émission et de réception.

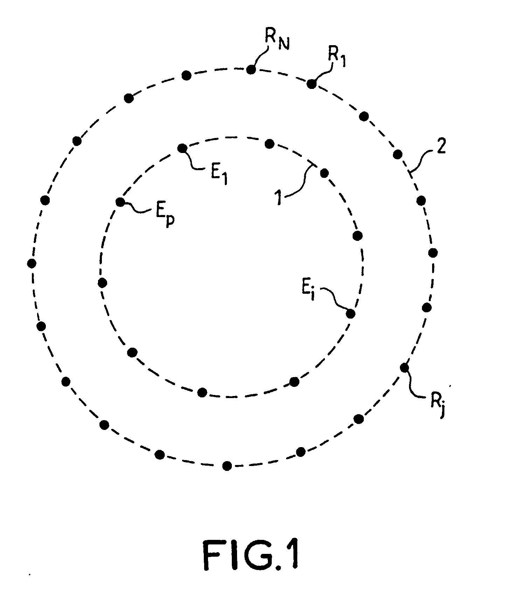

La figure 1 présente de façon schématique un radar à émission synthétique et à formation de faisceau par le calcul, notamment par la disposition des éléments de son antenne répartie. Ce radar comporte un réseau de P modules d'émission élémentaires $E_1$,... $E_i$, ...$E_p$ et un réseau de N modules de réception élémentaires $R_1$, ...$R_j$, ...$R_N$. Le réseau d'émission 1 est de préférence situé à l'intérieur du réseau de réception 2. L'émission est réalisée par l'ensemble des P éléments rayonnant $E_1$,... $E_i$, ...$E_P$ qui émettent simultanément des signaux différents. La réception est assurée par l'ensemble des N récepteurs $R_1$, ...$R_j$, ...$R_N$ qui reçoivent quasi simultanément les échos issus de l'émission.

A la réception, le filtrage adapté aux échos issus d'une direction de visée donnée consiste notamment à :

- décomposer le signal reçu sur chaque récepteur selon les P composantes émises ;
- appliquer un jeu de NxP phases (une par émetteur et par récepteur), jeu qui dépend de la direction de visée ;
- additionner les NxP signaux ainsi déphasés.

Il existe d'autres façons d'organiser le traitement, par exemple en traitant par sous-bandes, ou en appliquant des retards purs au lieu des déphasages. Néanmoins, toutes ces solutions reviennent à l'addition des NxP signaux pour chaque direction visée.

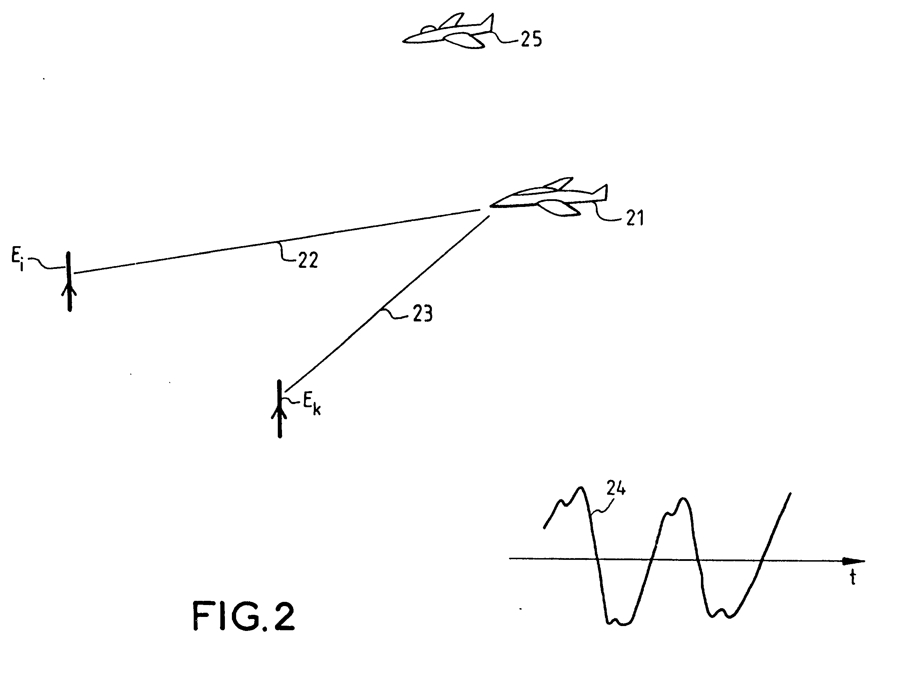

La figure 2 illustre une particularité rencontrée par un radar à antenne lacunaire répartie sur une grande surface. Cette figure montre que pour une même cible 21, le trajet aller-retour 22, 23 d'un signal radar est différent d'un émetteur ou d'un capteur à l'autre. Le signal global 24 combine les différents signaux reçus et notamment les différents déphasages dus aux différences de trajets 22, 23. Les différents signaux reçus issus des différents émetteurs constituent les composantes du signal global. Pour une cible 25 située à un autre endroit, la combinaison des retards est différente et donc le signal global 24 est lui aussi différent. Il faut donc un filtrage adapté à chaque direction, ou plutôt à chaque faisceau élémentaire. On a vu le nombre de faisceaux élémentaires nécessaire à la couverture de l'espace, ce nombre peut atteindre ou dépasser 100 000. Par ailleurs, le filtrage adapté décrit précédemment doit être appliqué pour chacun de ces faisceaux caractérisant une direction de visée. Il en résulte une puissance de calcul nécessaire très importante. Le nombre d'opérations par seconde peut en effet aller de $10^{12}$ jusqu'à par exemple $10^{17}$.

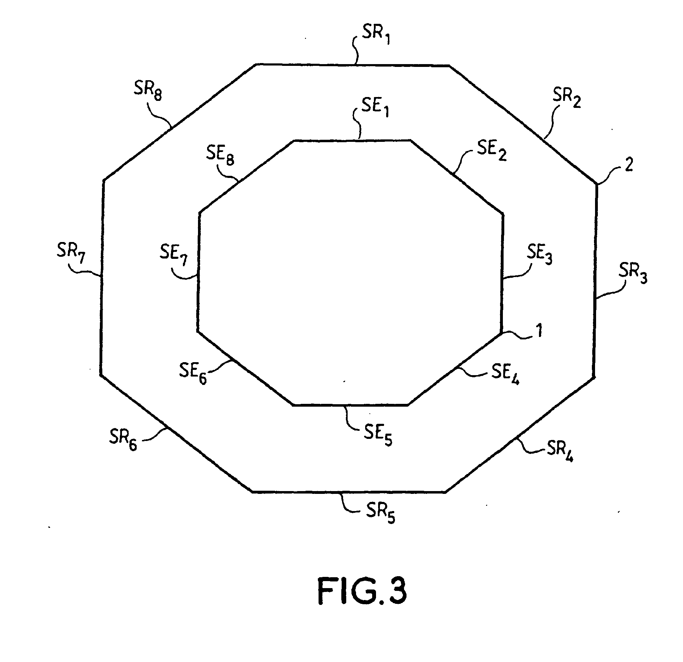

La figure 3 présente un exemple de réalisation d'un radar selon l'invention, plus particulièrement un exemple de la structure des réseaux d'émission 1 et de réception 2. C'est-à-dire notamment la répartition et le regroupement des modules d'émission et de réception. Pour réduire la puissance de calcul, les réseaux d'émission 1 et de réception 2 d'un radar selon l'invention sont tous deux décomposés en sous-réseaux $SE_1$, ...$SE_{NE}$, $SR_1$, ...$SR_{NR}$. A titre d'exemple dans la figure 3, NE = 8 et NR = 8, NE pourrait bien sûr être différent de NR. Les sous-réseaux d'émission et de réception sont couplés deux à deux pour le traitement radar, c'est-à-dire qu'un premier sous-réseau d'émission $SE_1$ est couplé avec tous les sous-réseaux de réception $SR_k$ et ainsi de suite. Dans le cas de la figure 3, il y a donc NE x NR = 64 couples de sous-réseaux d'émission et de réception. Le traitement cohérent des signaux reçus est alors réalisé en deux étapes :

- une première étape effectue un traitement cohérent de chaque couple des sous-réseaux d'émission et de réception $SE_i$, $SR_k$, seules les composantes issues de son sous-réseau d'émission associé $SE_i$ étant traités parmi ceux reçus par un sous-réseau $SR_k$ ;
- une deuxième étape effectue une association cohérente des résultats obtenus dans l'étape précédente.

Les sous-réseaux sont de préférence linéaires à pas constant, c'est-à-dire que leurs modules sont répartis selon une ligne droite avec un espacement constant entre récepteurs ou émetteurs contigus. Les sous-réseaux peuvent être répartis selon une géométrie quelconque. Ils peuvent être répartis par exemple en étoile, ou en polygone comme l'illustre la figure 3. Ce pôlygone peut être régulier ou non. Ces sous-réseaux peuvent être connexes ou disjoints. Les sous-réseaux de réception peuvent par exemple être inscrits dans un cercle dont le diamètre fait quelques centaines de mètres.

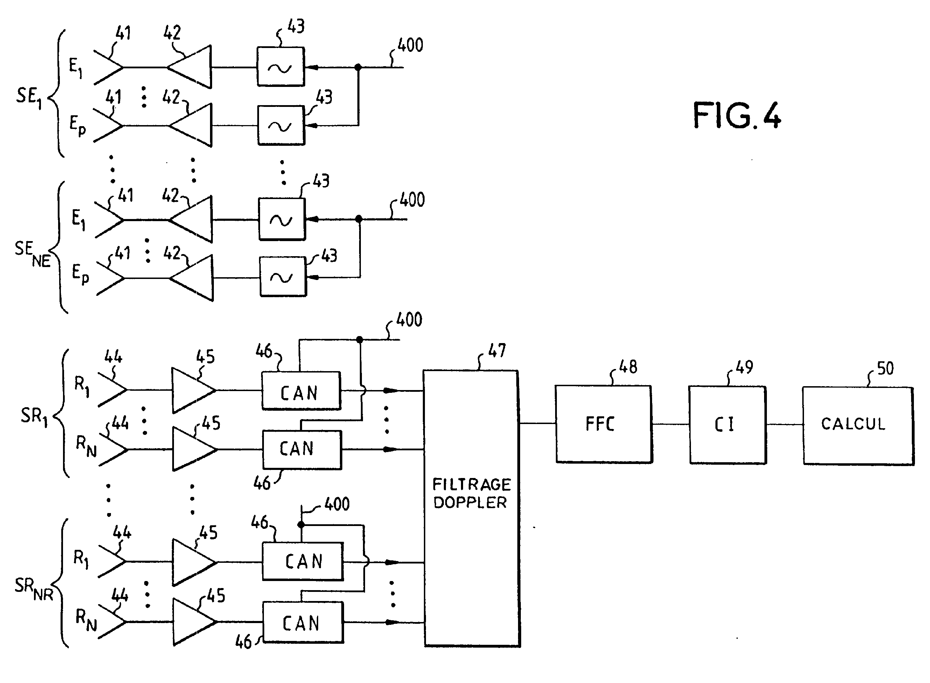

La figure 4 illustre par un synoptique les moyens de traitement et leur connexion aux modules d'émission $E_k$ et de réception $R_i$ répartis dans les sous-réseaux $SE_1$, ...$SE_{NE}$, $SR_1$, ...$SR_N$. Les moyens de traitement comportent des moyens de filtrage Doppler 47 effectuant par exemple des FFT (Transformées de Fourier Rapide) sur les signaux reçus et numérisés, des moyens 48 de formation de faisceaux par le calcul (FFC) et des moyens 49 de compression d'impulsion (CI). Les signaux délivrés par ces moyens de compression d'impulsion sont fournis à des moyens de calcul 50. La FFC 48 est relative à chaque sous-réseau de réception, la compression d'impulsion 49 est relative à chaque sous-réseau d'émission. Ce sont les moyens de calcul 50 qui effectuent l'association des résultats partiels obtenus en sortie de la compression d'impulsion 49. Dans le principe, les fonctions de filtrage Doppler 47, de FFC+CI 48, 49 et de calcul 50 peuvent être permutées. Néanmoins, il est préférable de situer le filtrage Doppler 47 avant la fonction de calcul 50, car c'est celle-ci qui accroît considérablement le débit.

Chaque module de réception $R_1$, ...$R_N$ comporte une antenne élémentaire 44 qui fournit le signal à un codeur 46 effectuant une conversion numérique du signal analogique. Les codeurs 46 effectuent ainsi l'échantillonnage et le codage des signaux reçus par les antennes élémentaires 44. Un amplificateur 45 est par exemple placé en sortie d'antenne. Un module de réception peut aussi comporter par exemple un ou plusieurs étages de démodulation avant conversion analogique-numérique non représentés, les dernières étapes de démodulation pouvant être effectuées en numérique. Le signal reçu numérisé est transmis aux moyens de filtrage Doppler. Chaque module d'émission comporte par exemple un oscillateur local 43, un amplificateur de puissance 42 et une antenne élémentaire d'émission 41. L'oscillateur local fournit un signal bas niveau aux moyens d'amplification 42, lesquels fournissent le signal d'émission à l'antenne élémentaire 41. Un module d'émission peut aussi comporter un organe qui délivre le signal modulant et une fonction de modulation. Le signal modulant peut être identique ou différent d'un module à l'autre. Etant données les distances importantes entre les modules d'émission, un radar selon l'invention comporte de préférence un oscillateur par module. Les oscillateurs d'un même sous-réseau $SE_1$, ...$SE_{NE}$ sont par exemple synchronisés par un signal transmis par une ligne 400.

Dans la mesure où on effectue un traitement cohérent du signal reçu par un sous-réseau de réception $SR_k$ couplé à un sous-réseau d'émission $SE_i$, les émissions et les réceptions de ces sous-réseaux doivent être synchronisées. A cet effet, un signal de synchronisation transmis par la ligne 400 attaque donc par exemple les oscillateurs locaux 43 d'un même sous-réseau d'émission et les codeurs du sous-réseau de réception qui lui est associé. Dans une autre solution, on peut par exemple calibrer les récepteurs à partir du signal émis par une partie ou la totalité des émetteurs, et calibrer les émetteurs par analyse des signaux reçus pendant l'émission.

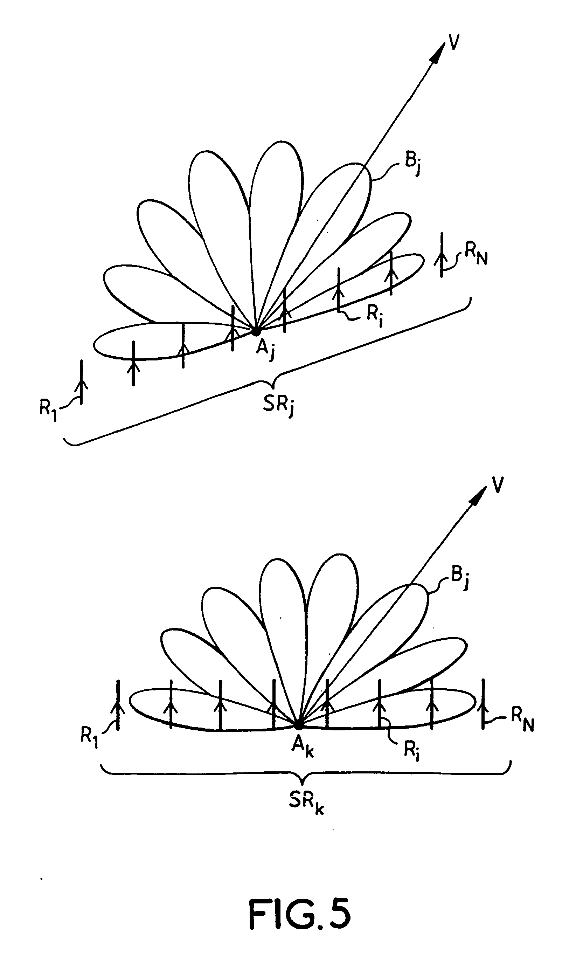

La figure 5 présente deux sous-réseaux de réception $SR_j$, $SR_k$. Chaque sous-réseau comporte N capteurs $R_i$. Il est donc possible de former N faisceaux de réception indépendants pour chaque sous-réseau. Chaque sous-réseau peut alors être modélisé en une antenne de réception unique centrée en un point, et ayant N diagrammes élémentaires : sous-réseau $SR_j$ centré en $A_j$, sous-réseau $SR_k$ centré en $A_k$. Si les sous-réseaux de réception sont linéaires et à pas constant, la FFC de chaque sous-réseau peut être réalisée par transformée de Fourier rapide (FFT), donc de façon économe en nombre d'opérations. Cela revient classiquement à affecter d'un coefficient chaque faisceau élémentaire associé à un capteur. Le radar selon l'invention exploite alors dans une deuxième étape de son traitement ces diagrammes élémentaires formés, pour chaque direction de visée. A titre d'exemple, il exploite dans une direction donnée V le lobe $B_j$ du premier sous-réseau $SR_j$ et le lobe $B_k$ du deuxième sous-réseau $SR_k$, par les moyens de traitement 47, 48, 49, 50 à la réception tels qu'illustrés par la figure 4. En particulier, dans cette direction donnée V, ils décomposent le signal reçu sur chaque récepteur selon les composantes du signal émis par les sous-réseaux d'émission $SE_i$. Dans cette direction V, les composantes du signal reçu ont bien sûr un gain différent d'un lobe $B_j$ à l'autre $B_k$.

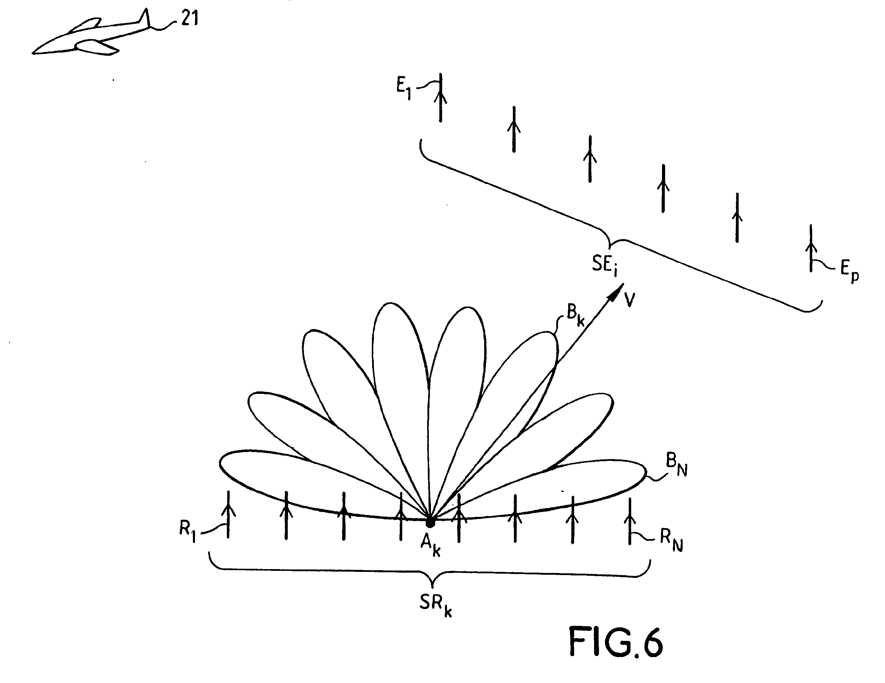

La figure 6 représente un couple de sous-réseaux d'émission réception $SE_i$, $SR_k$. Un sous-réseau d'émission $SE_i$ comporte P modules d'émission élémentaires $E_1$, ... $E_P$. Chaque module d'émission émet un signal qui lui est propre et qui constitue l'une des composantes du signal émis globalement par le radar. Les P signaux élémentaires émis par le sous-réseau $SE_i$ peuvent être regroupés sous forme de P combinaisons linéaires correspondant aux signaux observés par P cibles situées dans P directions de l'espace. Le traitement de compression d'impulsion 49 consiste à effectuer le filtrage adapté à chacune de ces P combinaisons. Ce filtrage joue alors un rôle d'isolation spatiale, lié à la disposition des modules d'émission, comme le fait la formation de faisceau à partir des modules de réception. L'effet produit est équivalent à un ensemble de faisceaux d'émission qui correspondent à l'émission des P combinaisons linéaires, dans P directions différentes, à partir du centre du sous-réseau d'émission. Les faisceaux sont d'autant plus facilement déterminés que les modules sont disposés selon un pas constant à l'intérieur d'un sous-réseau. Pour ces couples de sous-réseaux $SE_i$, $SR_k$, le signal reçu est donc décomposé selon les P composantes émises. Chaque récepteur $R_j$ du sous-réseau $SR_k$ fournit le signal aux moyens de numérisations 46, le signal numérique est ensuite filtré. Pour chaque direction de faisceau $B_k$, le signal est décomposé par les filtres de compression d'impulsion, c'est-à-dire que les composantes du signal reçu provenant du sous-réseau d'émission $SE_i$ sont filtrées. Il y a donc un jeu de PxN phases appliqué au signal, P correspondant au nombre d'émetteurs du sous-réseau d'émission $SE_i$, donc au nombre de composantes du signal émis, et N correspondant au nombre de récepteurs du sous-réseau de réception $SE_k$, donc aux nombre de faisceaux $B_1$. Cela donne PxN signaux intermédiaires obtenus pour un couple de sous-réseaux d'émission et de réception, ce qui fait NE x NR x N x P pour l'ensemble des couples de sous-réseaux.

Dans une deuxième étape, pour chaque direction de visée V, les moyens de calcul 50 sélectionnent un signal intermédiaire par couple de réseaux d'émission et de réception $SE_i$, $SR_k$. Ils sélectionnent par exemple le signal intermédiaire de plus fort gain. Puis ils appliquent une valeur de phase qui dépend de cette direction de visée V. Enfin, les moyens de calcul additionnent les signaux ainsi sélectionnés et déphasés pour définir classiquement la position de la cible 21. Comme il a été indiqué précédemment, le nombre de lignes de visée est très important. Il peut dépasser 100 000.

La répartition non seulement les modules de réception en sous-réseaux, mais aussi les modules d'émission, permet avantageusement la réduction de la puissance de calcul nécessaire par rapport à un calcul global sur l'ensemble des modules de réception et d'émission. Ainsi, si le radar comporte NE sous-réseaux d'émission et NR sous-réseaux de réception, il y a alors NE x NR couples de sous-réseaux d'émission et de réception $SE_i$, $SR_k$. Le nombre total d'émetteurs est NE x P et le nombre total de récepteurs est NR x N. On note par ailleurs $N_v$ le nombre de directions de visée.

On peut considérer l'application numérique suivante :

- NE=3
- NR = 3
- P=8
- N=32
- $N_v$ = 130 000

Pour un couple de sous-réseaux d'émission et de réception $SE_i$, $SR_k$, il n'y a que N x P directions différentes, c'est-à-dire correspondant à un écart de plus de 3 dB sur la fonction d'ambiguïté spatiale. La première étape du traitement opéré par un radar selon l'invention pour la détection d'une cible comporte donc la création des NE x NR x N x P signaux intermédiaires issus de l'ensemble des couples de sous-réseaux. Cela exige relativement peu d'opérations, notamment si NR est une puissance de 2 et que l'on utilise une FFT pour déterminer ces signaux intermédiaires.

Dans une deuxième étape, le radar exécute une association cohérente des résultats intermédiaires obtenus dans la première étape. En particulier, cette deuxième étape réalise, pour chaque direction de visée V, la sélection d'un signal intermédiaire par couple de sous-réseaux, et l'addition des NE x NR signaux intermédiaires sélectionnés. Le radar exécute $N_v$ x NE x NR opérations au lieu de $N_v$ x NE x NR x P x N opérations. Il y a donc un gain sur le nombre d'opérations par rapport à un calcul direct, ce gain est de PxN = 8x32, soit 256. La puissance de calcul nécessaire est ainsi réduite, dans cet exemple, de 256.

L'invention a été décrite pour une détection électromagnétique, c'est-à-dire par exemple pour une application radar à antenne répartie. L'invention peut néanmoins s'appliquer d'autres systèmes à émission et réception réparties. Ces systèmes peuvent notamment être optiques, dans le domaine visible ou infra rouge. Ces systèmes peuvent aussi être acoustiques, que ce soit dans le domaine de l'acoustique aérienne ou dans le domaine de l'acoustique sous-marine. Les modules d'émission et de réception sont regroupés comme précédemment décrit en sous-réseaux. Les signaux reçus sont alors traités en au moins deux étapes. La première étape réalise un traitement cohérent de chaque couple des sous-réseaux d'émission et de réception. La deuxième étape réalise au niveau de l'ensemble du réseau d'antenne une association cohérente des résultats de la première étape. L'invention peut donc s'appliquer notamment pour des fonctions de radar, de sonar ou de télécommunication.

## Revendications

1. Système à émission et réception répartie, comportant des sous-réseaux $SE_i$ de modules d'émission ($E_1$, ...$E_P$) et des sous-réseaux $SR_k$) de modules de réception ($R_1$, ...$R_N$) et des moyens de traitements (47, 48, 49, 50), les moyens de traitement effectuant :

   - dans une première étape un traitement cohérent pour chaque couple de sous-réseaux d'émission et de réception $SE_i$, $SR_k$.
   - dans une deuxième étape une association cohérente des signaux intermédiaires obtenus dans la première étape ;

   **caractérisé en ce que** :

   - dans la première étape, pour chaque couple $SE_i$, $SR_k$, le système comportant des moyens de formation de faisceaux par le calcul (48) et des moyens de compression d'impulsion (49), les moyens de formation de faisceaux (48) définissent les faisceaux de réception ($B_k$) du sous-réseau de réception $SR_k$ modélisé comme une unique antenne de réception, et les moyens de compression d'impulsion (49) calculent les filtres correspondant aux composantes du sous-réseau d'émission $SE_i$ pour les directions définies par les faisceaux de réception ($B_k$), les composantes étant filtrées pour chacune de ces directions pour obtenir NxP signaux intermédiaires, où N est le nombre de modules du sous-réseau de réception $SR_k$ et P est le nombre de modules du sous-réseau d'émission $SE_i$.;
- dans la deuxième étape, les moyens de calcul (50) du système sélectionnent un signal intermédiaire par couple $SE_i$, $SR_k$ et pour chaque ligne de visée (V), appliquent à ce résultat intermédiaire une valeur de phase qui dépend de cette ligne de visée puis additionnent tous ces signaux intermédiaires ainsi déphasés.

2. Système selon la revendication 1, **caractérisé en ce que** les sous-réseaux d'émission et/ou de réception sont linéaires.

3. Système selon la revendication 2, **caractérisé en ce que** les sous-réseaux d'émission et/ou de réception sont à pas constant.

4. Système selon l'une quelconque des revendications précédentes, **caractérisé en ce que** le système est un radar à émission synthétique et à formation de faisceau par le calcul.

**Claims**

1. A system with distributed emission and reception, including subnetworks $SE_i$ of emission modules ($E_1$, ...$E_P$) and subnetworks $SR_k$ of reception modules ($R_1$,...$R_N$) and processing means (47, 48, 49, 50), the processing means performing:

   - in a first step, coherent processing for each pair of emission $SE_i$ and reception $SR_k$ subnetworks;
   - in a second step, coherent association of the intermediate signals obtained in the first step;

   **characterised in that** the system includes:

   - in the first step, for each pair $SE_i$, $SR_k$, means of forming beams by calculation (48) and means of pulse compression (49), the means of forming beams (48) define the reception beams ($B_k$) of the reception subnetwork $SR_k$ designed as a single reception antenna, and the means of pulse compression (49) calculate the filters corresponding to the components in the emission subnetwork $SE_i$ for the directions defined by the reception beams ($B_k$), the components being filtered in each of these directions in order to obtain NxP intermediate signals, where N is the number of modules in the reception subnetwork $SR_k$ and P is the number of modules in the emission subnetwork $SE_i$;
   - in the second step, the computation means (50) of the system select an intermediate signal from pairs $SE_i$, $SR_k$ and for each line of sight (V), apply a phase value to this intermediate result which depends on this line of sight and then adds all of said intermediate signals dephased in this manner.

2. The system according to claim 1, **characterised in that** the emission and/or reception subnetworks are linear.

3. The system according to claim 2, **characterised in that** the emission and/or reception subnetworks are constant pitch.

4. The system according to any one of the previous claims, **characterised in that** the system is a radar with synthetic emission and beam formation by calculation.

**Patentansprüche**

1. System mit verteiltem Senden und Empfangen, das Subnetze $SE_i$ von Sendemodulen ($E_1$, ...$E_P$) und Subnetze $SR_k$ von Empfangsmodulen ($R_1$,...$R_N$) und Verarbeitungsmittel (47, 48, 49, 50) umfasst, wobei die Verarbeitungsmittel Folgendes ausführen:

   - in einem ersten Schritt eine kohärente Verarbeitung für jedes Paar Sende- und Empfangssubnetze $SR_k$, $SE_i$;
   - in einem zweiten Schritt eine kohärente Assoziation der im ersten Schritt erhaltenen Zwischensignale;

   **dadurch gekennzeichnet, dass**:

   - das System im ersten Schritt für jedes Paar $SE_i$, $SR_k$ Mittel zur Strahlformung durch Berechnen (48) und Mittel zur Impulskompression (49) beinhaltet, wobei die Strahlformungsmittel (48) die Empfangsstrahlen ($B_k$) des Empfangssubnetzes $SR_k$ definieren, die als einzelne Empfangsantenne implementiert ist, und die Impulskompressionsmittel (49) die Filter berechnen, die den Komponenten des Sendesubnetzes $SE_i$ für die durch die Empfangsstrahlen ($B_k$) definierten Richtungen entsprechen, wobei die Komponenten für jede dieser Richtungen gefiltert werden, um NxP Zwischensignale zu erhalten, wobei N die Zahl der Module des Empfangssubnetzes $SR_k$ und P die Zahl der Module des Sendesubnetzes $SE_i$ ist;

- die Rechenmittel (50) des Systems im zweiten Schritt ein Zwischensignal pro Paar $SE_i$, $SR_k$ und für jede Sichtlinie (V) auswählen, einen Phasenwert auf dieses Zwischenergebnis anwenden, der von dieser Sichtlinie abhängt, und dann alle auf diese Weise phasenverschobenen Zwischensignale addieren.

2. System nach Anspruch 1, **dadurch gekennzeichnet, dass** die Sende- und/oder Empfangssubnetze linear sind.

3. System nach Anspruch 2, **dadurch gekennzeichnet, dass** die Sende- und/oder Empfangssubnetze konstante Abstände haben.

4. System nach einem der vorherigen Ansprüche, **dadurch gekennzeichnet, dass** das System ein Radar mit synthetischer Sendung und Strahlformung durch Berechnung ist.

FIG.1

FIG.2

EP 1 233 282 B1

FIG.3

FIG.4

EP 1 233 282 B1

FIG.5

FIG.6

EP 1 233 282 B1

**EP 1 233 282 B1**

## RÉFÉRENCES CITÉES DANS LA DESCRIPTION

**Documents brevets cités dans la description**

- FR 8708186